# DEMANDE DE BREVET EUROPEEN

(11) **EP 1 095 604 A1**
(43) Date de publication de la demande: **02.05.2001**
(21) Numéro de dépôt: 99203585.7
(22) Date de dépôt: 18.06.1997
(51) Int. Cl.: A47J 31/04

(54) **Appareil à infuser**

(30) Priorité: 01.07.1996 FR 9608169
(62) Demande divisionnaire de: 97401403.7
(71) Demandeur: SEB S.A., 69130 Ecully (FR)
(72) Inventeur: Gaulard, Hervé, 39700 Courte Fontaine (FR)
(74) Mandataire: Somnier, Jean-Louis

(57) **Abrégé**

Un appareil à infuser comprend un récipient (1), pour contenir un liquide, le fond (la) du récipient comportant une ouverture en communication avec une chambre (3) de pompe thermique, logée dans un élément chauffant (2),un tube (4) s'étendant dans le récipient entre la chambre (3) et un panier formant filtre (5) pour contenir une matière à infuser.

Le récipient (1) comprend un couvercle (11) amovible, disposé au-dessus du panier formant filtre (5), le couvercle (1) comprenant des moyens de fixation libérables (15, 32) pour fixer ledit couvercle (11) au panier formant filtre (5).

## Description

La présente invention concerne un appareil à infuser.

On connaît des appareils à infuser, tels que décrits par exemple dans le brevet américain US 3 991 664, comprenant un récipient pour contenir du liquide, le fond du récipient comportant une ouverture en communication avec une chambre de pompe thermique logée dans un élément chauffant. Un tube s'étend généralement dans le récipient entre la chambre et la partie supérieure du récipient, un panier formant filtre, destiné à recevoir une matière aromatique, étant fixé autour du tube, sous l'extrémité supérieure de ce tube, de sorte que le liquide aspiré dans le tube, retombe dans le panier formant filtre, puis dans le récipient après avoir traversé la matière aromatique.

Cependant, l'extraction du panier formant filtre associé au tube de percolation, pour laver ces éléments et remplir le panier formant filtre de matières aromatiques, est généralement compliquée à mettre en oeuvre. L'utilisateur doit en effet saisir le panier formant filtre, au risque de se brûler.

En outre, un dispositif de valve est disposé entre le récipient et la chambre de pompe thermique pour réguler le passage du liquide du récipient vers cette chambre, en fonction de la pression régnant dans la chambre.

Cependant, dans ce type d'appareil à infuser, il est nécessaire de contrôler à la fois la température du liquide et celle de l'élément chauffant. Les appareils connus utilisent deux thermostats, l'un en contact avec le fond du récipient contenant le liquide, l'autre en contact avec l'élément chauffant.

La présente invention a pour but de résoudre les inconvénients précités et de proposer un appareil à infuser, de construction simplifiée, permettant une manipulation en toute sécurité des différents éléments de cet appareil.

L'appareil à infuser visé par l'invention comprend un récipient pour contenir un liquide, le fond du récipient comportant une ouverture de fond en communication avec une chambre de pompe thermique logée dans un élément chauffant, un tube s'étendant dans le récipient entre la chambre et une partie supérieure du récipient, un panier formant filtre pour contenir une matière à infuser étant fixé autour du tube et un dispositif de valve étant disposé entre le récipient et la chambre de pompe thermique pour réguler le passage du liquide du récipient vers la chambre de pompe thermique en fonction de la pression régnant dans ladite chambre.

Selon un aspect de l'invention, le récipient comprend un couvercle amovible, disposé au-dessus du panier formant filtre, un couvercle comprenant des moyens de fixation libérable pour fixer ce couvercle au panier formant filtre.

Ainsi, le couvercle permet à la fois d'obturer le récipient en cours d'utilisation et de déplacer le panier formant filtre associé au tube de percolation, pour sortir ou mettre en place ceux-ci dans le récipient.

La manipulation de ces éléments peut donc être réalisée en toute sécurité, sans risque de brûlure pour l'utilisateur.

Selon une version avantageuse de l'invention, le couvercle comprend des moyens de commandé adaptés à déplacer les moyens de fixation libérable entre une position de fixation dans laquelle le couvercle est fixé au panier formant filtre, et une position libre dans laquelle le couvercle est désolidarisé du panier formant filtre, les moyens de fixation libérable étant en position libre lorsque les moyens de commande sont au repos.

Ainsi, lorsque le panier formant filtre et le couvercle sont placés sur le récipient, le couvercle peut être naturellement retiré ou placé sur le récipient sans entraîner le panier formant filtre si aucune action positive n'est exercée sur les moyens de commande.

Selon un autre aspect de l'invention cet appareil à infusion est caractérisé en ce que l'élément chauffant comprend une partie supérieure adaptée à obturer l'ouverture de fond du récipient et à être en contact avec le liquide contenu dans le récipient, et une patte solidaire de la partie supérieure de l'élément chauffant, des moyens de coupure de l'alimentation électrique de l'élément chauffant comprenant un capteur thermique en contact avec la patte de l'élément chauffant.

Grâce à cette disposition des moyens de coupure sur une patte de l'élément chauffant solidaire de sa partie supérieure en contact avec le liquide, un même capteur thermique permet à la fois de surveiller la température du liquide contenu dans le récipient et de surveiller la température de l'élément chauffant pour assurer la coupure à sec lorsque l'appareil est mis sous tension sans liquide dans le récipient.

De préférence, les moyens de coupure sont adaptés à couper l'alimentation électrique de l'élément chauffant pour une température de consigne calibrée entre 70°C et 100°C.

D'autres particularités et avantages de l'invention apparaîtront encore dans la description ci-après.

Aux dessins annexés, donnés à titre d'exemples non limitatifs :
- la figure 1 est une vue en coupe verticale d'un appareil à infuser conforme à une première réalisation de l'invention;
- la figure 2 est une vue en perspective agrandie de l'élément chauffant de la figure 1;
- la figure 3 est une vue en perspective éclatée du couvercle associé au panier formant filtre de l'appareil à infuser de la figure 1;
- la figure 4 est une vue en coupe verticale d'un appareil à infuser selon un second mode de réalisation de l'invention; et
- la figure 5 est une vue en perspective de l'appareil à infuser illustré à la figure 1 muni d'une poignée 18.

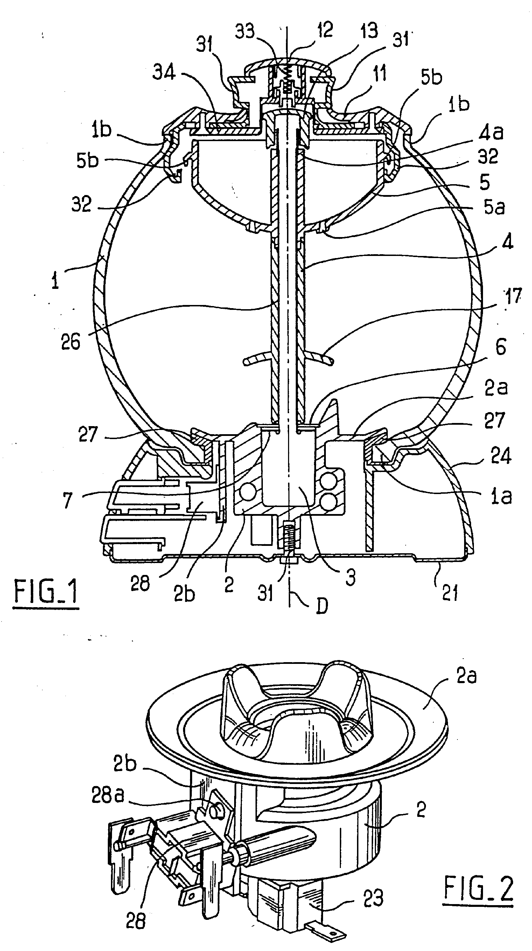

En référence tout d'abord à la figure 1, un appareil à infuser comprend un récipient 1 pour contenir un liquide, de préférence de l'eau, permettant de préparer une boisson à partir de matières aromatiques en poudres ou en feuilles, telles que du thé par exemple.

Le fond la du récipient 1 comprend une ouverture de fond en communication avec une chambre 3 de pompe thermique qui est ménagée à l'intérieur d'un élément chauffant 2.

Dans cet exemple, l'ouverture du fond la est circulaire et l'élément chauffant 2 comprend une partie supérieure 2a, en forme sensiblement de disque, de diamètre supérieur au diamètre de l'ouverture de fond, de manière à obturer cette ouverture du récipient 1.

Cette partie supérieure 2a présente ainsi une face supérieure adaptée à être en contact avec le liquide contenu dans le récipient 1.

L'élément chauffant 2 est inséré dans une base 24 de l'appareil sur laquelle repose également le récipient 1. Un joint circulaire 27, de section transversale en forme de U, est placé autour de l'ouverture du fond la, la face supérieure 2a de l'élément chauffant 2 étant en contact avec une branche supérieure du joint 27 et la base 24 étant en contact avec une branche inférieure du joint 27.

Une tôle 21 solidaire de la base 24 et sensiblement parallèle à la partie supérieure 2a de l'élément chauffant 2 est fixée à l'élément chauffant 2 au moyen d'une vis 31 par exemple, de sorte que le joint 27 soit comprimé entre la base 24 et l'élément chauffant 2.

Cette construction permet de constituer une étanchéité entre le récipient 1 et l'élément chauffant 2 tout en évitant de faire subir au récipient 1 des déformations ou des contraintes pouvant l'endommager.

La forme et la disposition du joint permettent en outre de prévenir toute introduction de liquide dans la base 24, où sont réalisées les différentes connexions électriques, même si le récipient 1, généralement en verre, est cassé.

Conformément à l'invention, l'élément chauffant comprend une patte 2b solidaire de la partie supérieure 2a et s'étendant dans la base 24 de l'appareil.

Comme illustré à la figure 2, des moyens de coupure 28 de l'alimentation électrique de l'élément chauffant 2 comprennent un capteur thermique 28a en contact avec cette patte 2b de l'élément chauffant 2.

Ces moyens de coupure forment ainsi un thermostat 28 pour réguler la température du liquide et/ou de l'élément chauffant 2. La température de consigne de ce thermostat peut être calibrée entre 70°C et 100°C.

Cette disposition du thermostat et le calibrage de sa température de consigne permet à la fois de réguler la température du liquide à chauffer et la température de l'élément chauffant en cas de chauffe à sec.

Ce thermostat coupe l'alimentation électrique 23 de manière connue lorsque la température de consigne est dépassée.

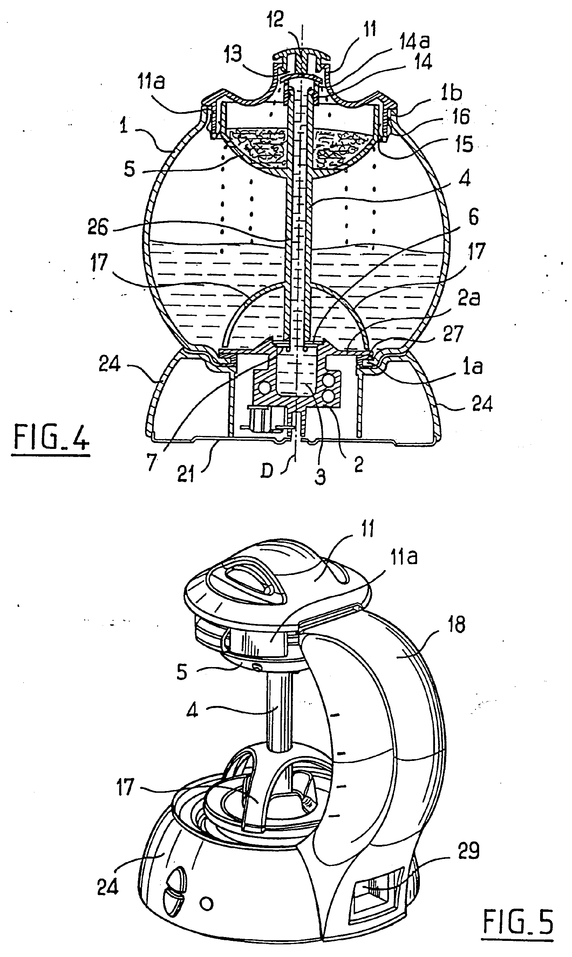

Comme illustré à la figure 5, un cordon d'alimentation électrique amovible (non représenté) peut être branché dans une prise de connexion 29 débouchant sur la base 24 de l'appareil.

Un tube 4 s'étend verticalement dans le récipient 1, entre la chambre 3 et une partie supérieure du récipient 1. Ce tube 4 permet de guider le liquide sous pression qui s'élève à partir de la chambre 3 jusqu'à l'extrémité supérieure 4a du tube 4, le liquide retombant alors dans un panier formant filtre 5 fixé autour du tube 4, sous son extrémité supérieure 4a.

La matière aromatique est placée dans ce panier formant filtre 5 qui comprend des orifices 5a, permettant au liquide de s'écouler tout en retenant la matière aromatique.

Ce système de percolation comporte de manière connue un dispositif de valve 6, 7, disposé entre le récipient 1 et la chambre 3 de pompe thermique pour réguler le passage du liquide du récipient 1 vers cette chambre 3 en fonction de la pression régnant dans cette dernière.

Ce dispositif de valve 6, 7, comprend dans l'exemple décrit, deux rondelles 6, 7, disposées à l'entrée de la chambre 3 et montées sur le tube 4, de façon à être libres en translation par rapport à l'axe longitudinal vertical D du tube 4.

La rondelle supérieure 6 est percée'de trous de passage du liquide, alors que la rondelle inférieure 7 est pleine.

De préférence, ces rondelles 6, 7 sont montées à l'extrémité inférieure d'un second tube 26 pouvant coulisser légèrement à l'intérieur du premier tube 4, de manière à absorber les différences de dilatation.

Ce second tube 26 est maintenu à son extrémité inférieure par un retreind.

Ainsi, lorsque le tube 4 est réalisé en matière plastique, il est protégé de la chaleur, dans le cas de chauffe à sec par exemple, par le tube 26 et les rondelles 6, 7 réalisés en métal pour constituer un pont thermique entre l'élément chauffant 2 et le tube 4.

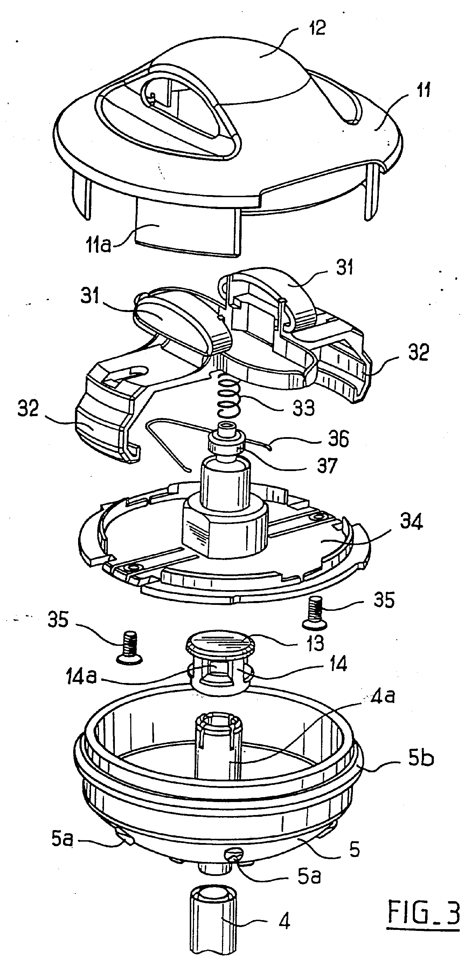

Comme illustré à la figure 3, le récipient 1 comprend un couvercle 11 amovible, disposé au-dessus du panier formant filtre 5. Ce couvercle 11 comprend des moyens de fixation libérable pour fixer le couvercle 11 au panier formant filtre 5.

Dans cet exemple, les moyens de fixation libérable comprennent deux crochets 32, adaptés à s'étendre entre le panier formant filtre 5 et le bord supérieur 1b du récipient, les crochets 32 étant maintenus par une force de rappel élastique, en contact avec le bord supérieur 1b du récipient 1 dans une position libre comme expliqué ci-dessous.

Les crochets 32 peuvent être maintenus écartés par un ressort 36, comme illustré à la figure 3, constitué de deux lames en contact avec les crochets 32 et repoussant ces derniers; la forme des crochets 32 pourrait également être conçue pour que les crochets 32 fassent office de ressorts.

Le couvercle 11 comprend des moyens de commande 31 adaptés à déplacer les moyens de fixation libérable 32 entre une position de fixation dans laquelle le couvercle 11 est fixé au panier formant filtre 5 et la position libre dans laquelle le couvercle 11 est désolidarisé du panier formant filtre 5.

Les moyens de fixation libérable 32 sont dans la position libre lorsque les moyens de commande 31 sont au repos, de sorte que le couvercle 11 puisse être manipulé indépendamment du panier formant filtre et du tube de percolation 4.

Comme bien illustré à la figure 3, les moyens de commande 31 sont constitués de boutons 31 faisant saillie sur le couvercle 11. Ces boutons 31 sont solidaires des crochets 32 de fixation.

Les boutons 31 sont diamétralement opposés et peuvent être rapprochés l'un de l'autre pour déplacer les crochets 32 vers le panier formant filtre 5, dans un plan perpendiculaire, l'axe D de l'appareil et contre l'action du ressort 36.

Le panier formant filtre 5 comprend des moyens complémentaires 5b adaptés à venir en prise avec les crochets 32 lorsque ce panier 5, associé au tube 4, est suspendu par gravité au couvercle 11.

Les moyens complémentaires 5b sont de préférence constitués par une gorge 5b s'étendant sur la périphérie du panier formant filtre, les crochets 32 pouvant venir en prise dans la gorge 5b à n'importe quel niveau de la périphérie du panier formant filtre 5.

Ils pourraient également être constitués d'ergots ponctuels diamétralement opposés sur la périphérie du panier 5.

Le couvercle 11 logeant les moyens de commande 31 des crochets 32, peut être fermé en regard du panier formant filtre 5 par une plaque 34 fixée au moyen de vis 35 par exemple, pour protéger l'intérieur du couvercle de la vapeur s'échappant par le tube 4.

De préférence, l'extrémité supérieure du tube 4 est surmontée d'un élément formant chapeau 13, 14. Cet élément formant chapeau comporte une partie pleine 13 s'étendant dans un plan sensiblement perpendiculaire à l'axe longitudinal D du tube 4 et une aile 14 s'étendant autour de l'extrémité supérieure 4a du tube 4, légèrement au-delà de cette extrémité 4a. Cette aile 14 comporte des ouvertures 14a réparties régulièrement par rapport à l'axe longitudinal D du tube 4.

Cet élément formant chapeau permet de répartir uniformément le liquide projeté dans le panier formant filtre 5. Il permet également de faire fonctionner, sans danger, l'appareil sans son couvercle 11 en évitant les projections de liquide vers le haut.

De préférence, comme illustré à la figure 3, le couvercle 11 comprend un poussoir 37 s'étendant dans l'axe D de l'appareil et maintenu en appui par un ressort 33 sur la partie pleine 13 de l'élément formant chapeau.

Ce poussoir 37 permet ainsi d'amortir les chocs, lors du fonctionnement de l'appareil, dûs à la pression de l'eau sur le tube 4 de percolation.

De préférence, le tube 4 comporte au moins trois pieds 17 illustrés à la figure 5, répartis régulièrement, par rapport à l'axe longitudinal D du tube 4, de sorte que ce dernier puisse être posé verticalement de manière stable, sur un plan, lorsqu'il est ôté du récipient 1.

L'invention n'est pas limitée au mode de réalisation décrit ci-dessus, et à titre d'exemple, un second mode de réalisation illustré à la figure 4 va être décrit ci-dessous.

Les parties communes et portant les mêmes références que celles visées dans les figures 1 à 3, ne seront pas redécrites ci-dessous.

A la figure 4, le couvercle 11 du récipient 1 comprend en outre une aile 11a, s'étendant vers le fond la du récipient et de forme sensiblement cylindrique. Cette aile 11a s'étend entre le panier formant filtre 5 et le bord supérieur 1b du récipient 1.

Les moyens de fixation libérable 15 permettent de fixer le panier formant filtre 5 à l'aile lla du couvercle 11.

Ces moyens de fixation libérable comprennent une lame élastique 15, formant un ressort, qui est fixée à une extrémité inférieure de l'aile 11a du couvercle 11 et est adaptée à être comprimée entre le panier formant filtre 5 et l'aile lla du couvercle 11.

Un bouton de manoeuvre 12 est mobile en translation suivant l'axe longitudinal D du tube 4 entre une position de repos, en saillie sur le couvercle 11, et une position appuyée dans laquelle la fixation du panier formant filtre 5 au couvercle 11 est libérée.

Une seconde lame élastique 16 peut également être fixée à l'aile lla pour être insérée entre cette aile lla et le bord supérieur lb du récipient 1 afin de fixer le couvercle 11 au récipient.

Les actions des deux lames élastiques 15, 16 étant indépendantes, il est possible de maintenir le panier 5 et le tube 4 dans le couvercle 11 sans que ce dernier soit en place sur le récipient 1.

On peut également remettre le couvercle 11 sur le récipient 1 après avoir ôté le tube 4 et le panier formant filtre 5.

Cette fixation par lame élastique 15 du tube 4 dans le couvercle 11 est libérable dans la mesure où on peut déclipser le couvercle 11 du panier formant filtre 5 en appuyant simplement sur le bouton de manoeuvre 12, sans toucher le tube 4 et ses attributs (panier 5, pieds 17), évitant ainsi les risques de brûlure ou de salissure.

Ces lames élastiques 15, 16, permettent en outre d'amortir les à-coups donnés par la pression du liquide sur le tube 4.

On va maintenant décrire la mise en place et le retrait du panier formant filtre dans le récipient 1 de ce deuxième mode de réalisation de l'appareil à infuser.

Pour préparer la boisson, on sort le couvercle 11 du récipient 1, le tube 4 et le panier formant filtre 5 étant entraînés également hors du récipient 1.

On déclipse le tube 4 du couvercle 11 en appuyant sur le bouton de manoeuvre 12 pour accéder au panier formant filtre 5.

Grâce aux pieds 17, l'ensemble du tube 4 et du panier 5 peut rester stable sur un plan pendant le remplissage du panier formant filtre 5.

Pour replacer l'ensemble de percolation dans le récipient 1, on positionne d'abord le couvercle 11 sur le panier formant filtre 5 et l'ensemble ainsi constitué est disposé dans le récipient 1. Le bouton de manoeuvre 12 est alors positionné dans sa position de repos, en saillie sur le couvercle 11.

La manipulation du panier formant filtre 5 est ainsi réalisable sans risque de brûlure ou de salissure.

## Revendications

1. Appareil à infuser comprenant un récipient (1) pour contenir un liquide, le fond (1a) dudit récipient comportant une ouverture de fond en communication avec une chambre (3) de pompe thermique logée dans un élément chauffant (2), un tube (4) s'étendant dans le récipient entre la chambre (3) et une partie supérieure du récipient (1), un panier formant filtre (5) pour contenir une matière à infuser étant fixé autour du tube (4), et un dispositif de valve (6, 7) disposé entre le récipient (1) et la chambre (3) de pompe thermique pour réguler le passage du liquide du récipient (1) vers la chambre (3) de pompe thermique en fonction de la pression régnant dans ladite chambre (3), caractérisé en ce que le récipient (1) comprend un couvercle (11) amovible, disposé au-dessus du panier formant filtre (5), le couvercle (1) comprenant des moyens de fixation libérables (15, 32) pour fixer ledit couvercle (11) au panier formant filtre (5).

2. Appareil conforme à la revendication 1, caractérisé en ce que le couvercle (11) comprend des moyens de commande (31) adaptés à déplacer les moyens de fixation libérable (32) entre une position de fixation dans laquelle le couvercle (11) est fixé au panier formant filtre (5) et une position libre dans laquelle le couvercle (11) est désolidarisé du panier formant filtre (5), les moyens de fixation libérable (32) étant en position libre lorsque les moyens de commande sont au repos. ^{'}

3. Appareil conforme à l'une des revendications 1 ou 2, caractérisé en ce que le panier formant filtre (5) comprend des moyens complémentaires (5b) adaptés à venir en prise avec les moyen de fixation libérable (32) lorsque le panier formant filtre (5), associé au tube (4) est suspendu par gravité au couvercle (11).

4. Appareil conforme à l'une des revendications 1 à 3, caractérisé en ce que les moyens de fixation libérable comprennent au moins deux crochets (32) adaptés à s'étendre entre le panier formant filtre (5) et le bord supérieur (1b) du récipient, les crochets (32) étant maintenus par une force de rappel élastique, en contact avec le bord supérieur (lb) du récipient (1) dans ladite position libre.

5. Appareil conforme à la revendication 3, caractérisé en ce que les moyens complémentaires (5b) sont constitués d'une gorge (5b) s'étendant sur la périphérie du panier formant filtre (5).

6. Appareil conforme à la revendication 1, caractérisé en ce que le couvercle (11) comprend une aile (11a), s'étendant vers le fond du récipient (1), entre le panier formant filtre (5) et le bord supérieur (1b) du récipient (1), les moyens de fixation libérable (15) permettant de fixer le panier formant filtre (5) à l'aile (11a) du couvercle (11), celui-ci comprenant un bouton de manoeuvre (12) mobile en translation suivant l'axe longitudinal (D) du tube (4) entre une position de repos, en saillie sur le couvercle (11), et une position appuyée dans laquelle la fixation du panier formant filtre (5) au couvercle (11) est libérée.

7. Appareil conforme à la revendication 6, caractérisé en ce que les moyens de fixation libérale (15) comprennent une lame élastique formant un ressort, qui est fixée à une extrémité inférieure de l'aile (11a) du couvercle (11) et est adaptée à être comprimée entre le panier formant filtre (5) et l'ailé (11a) du couvercle (11).

8. Appareil suivant l'une quelconque des revendications 1 à 7, caractérisé en ce que l'élément chauffant (2) comprend une partie supérieure (2a) adaptée à obturer ladite ouverture de fond du récipient (1) et à être en contact avec le liquide contenu dans le récipient (1) et une patte (2b) solidaire de ladite partie supérieure (2a), des moyens de coupure (28) de l'alimentation électrique de l'élément chauffant (2) comprenant un capteur thermique (28a) en contact avec ladite patte (2b) de l'élément chauffant (2).

9. Appareil conforme à la revendication 8, caractérisé en ce que les moyens de coupure (28) sont adaptés à couper l'alimentation électrique de l'élément chauffant (2) pour une température de consigne calibrée entre 70°C et 100°C.
